# EUROPEAN PATENT SPECIFICATION

(11) **EP 1 975 473 B1**
(45) Date of publication and mention of the grant of the patent: **21.12.2011**
(21) Application number: 08251155.1
(22) Date of filing: 28.03.2008
(51) Int. Cl.: F16H 61/662

(54) **Continuously variable transmission and vehicle**
Stufenlos verstellbares Getriebe und Fahrzeug
Transmission à variation continue et véhicule

(30) Priority: 30.03.2007 JP 2007090683; 06.09.2007 JP 2007231760
(43) Date of publication of application: 01.10.2008
(73) Proprietor: Yamaha Hatsudoki Kabushiki Kaisha, Shizuoka-ken Shizuoka 438-8501 (JP)
(72) Inventor: Asaoka, Ryousuke, Shizuoka-ken 438-8501 (JP)
(74) Representative: Lamb, Martin John Carstairs

(56) References cited:
- WO-A1-2006/006506

## Description

### FIELD OF THE INVENTION

The present invention relates to a continuously variable transmission, and more particularly to a continuously variable transmission that is suitable for mounting in a vehicle like a straddle-type vehicle.

### BACKGROUND TO THE INVENTION

A V-belt type continuously variable transmission is often used in a straddle-type vehicle like a scooter motorcycle. The V-belt type continuously variable transmission includes a primary shaft to which output of a power source like an engine is input, a secondary shaft that extracts output to be transmitted to a driving wheel, and a paired primary and secondary sheave that are respectively disposed on the primary shaft and the secondary shaft, and that have variable groove widths. A V-belt is wound around both sheaves, and a groove width adjustment mechanism varies the groove width of each sheave. As a result, the winding diameter of the V-belt around each sheave is adjusted to adjust the speed change ratio between the sheaves in a continuously variable manner.

Normally, the primary sheave and the secondary sheave are formed by a fixed flange and a moveable flange with a V-groove formed therebetween. Each moveable flange is provided such that it can move in the axial direction of the primary shaft or the secondary shaft. The groove width adjustment mechanism moves the moveable flange to adjust the speed change ratio in a continuously variable manner.

There is a known V-belt type continuously variable transmission of this type in which an electric motor is used to move the moveable flange of the primary sheave, thereby adjusting groove width. The known V-belt type continuously variable transmission uses movement driving force of the electric motor to move the moveable flange in either a direction that narrows the width of the groove of the primary sheave (a Top side) or a direction that widens the width of the groove of the primary sheave (a Low side), thereby allowing adjustment of the groove width (for example, refer to JP-A-04-210156). The known V-belt type continuously variable transmission is suitable for use with a straddle-type vehicle (for example, a motorcycle).

A scooter motorcycle provided with a mechanism for electronically controlling a V-belt type automatic continuously variable transmission automatically changes the speed change ratio of the continuously variable transmission without requiring the rider to perform any operations (for example, JP-A-62-175228). More specifically, a pre-set program (map) can be performed to automatically change the speed change ratio of the continuously variable transmission based on information such as vehicle speed, engine speed, accelerator opening degree, or the like. Thus, the rider's maneuvering operations become simpler, which has led to the adoption of automatic continuously variable transmissions in various vehicle types in recent times.

A motorcycle provided with an automatic continuously variable transmission that performs this kind of electronic control includes a deceleration lever that the rider can use to input their intentions. Various types of deceleration lever are known such as a deceleration lever that allows the speed change ratio of the continuously variable transmission to be manually set in accordance with the position of the deceleration lever (for example, refer to JP-A-04-131558), and a deceleration lever provided with a switch that allows down shift to be performed manually by forcibly changing the speed change ratio (for example, refer to JP-A-62-175228). These known devices allow the advantages of the automatic continuously variable transmission to be exploited while also allowing the intentions of the rider to be used as a basis for continually obtaining a desired speed change ratio. In addition, driving with use of engine brake, and advance down shift can be performed, thereby reducing the problem of unresponsive acceleration.

The present inventor has developed a V-belt type continuously variable transmission that is provided with a control program (a kick down) that down shifts in accordance with rider's intentions. In addition, use of the V-belt type continuously variable transmission provided with the kick down in various types of running condition was investigated. Amongst these, it was found that, if kick down is performed when accelerating again after deceleration, there are occasions when unrequired racing of the engine causes an un-smooth acceleration feeling.

Document WO 2006/006506 represents the closest prior art and shows the preamble of claims 1 and 7.

### SUMMARY OF THE INVENTION

Aspects Of the present invention are set forth in the independent claims. Preferred but non-essential features of the invention are set forth in the dependent claims.

The invention has been devised in light of the above-described problems. A continuously variable transmission of the invention is a continuously variable transmission having a speed change ratio that is controlled by a control device. The continuously variable transmission includes a kick down operation member. The control device is set with or comprises a normal mode that sets a control target value, a kick down mode that sets the control target value further to a Low side than the normal mode, and a limit value of the control target value used during re-acceleration. In response to operation of the kick down operation member, the control target value is set by the kick down mode instead of the normal mode set in the control device, and if acceleration is performed after a throttle is fully closed during control of the kick down mode, the control target value is set so as not to pass to the Low side of the limit value of the control target value used during re-acceleration.

The control device may be set with or comprise a plurality of levels of kick down modes that set the control target value progressively further to the Low side than the normal mode. In this configuration, in response to operation of the kick down operation member, the control target value is set by one of the kick down modes among the plurality of levels of kick down modes instead of the normal mode set in the control device, and if acceleration is performed after the throttle is fully closed during control of the given kick down mode, the control target value is set so as not to pass to the Low side of the limit value of the control target value used during re-acceleration.

For example, the control device may determine whether or not acceleration is performed after the throttle is fully closed using a sensor that detects an operation amount of an accelerator operation member.

In addition, the control device may perform control such that if acceleration is performed after the throttle is fully closed during control of the kick down mode, and if the control target value set by the kick down mode is further to a Top side than the limit value of the control target value used during re-acceleration, the given control target value is set as the control target value, and if the control target value set by the kick down mode is further to the Low side than the limit value of the control target value used during re-acceleration, the limit value of the control target value used during re-acceleration is set as the control target value instead of the given control target value.

Moreover, for example, if acceleration is performed after the throttle is fully closed during control of the kick down mode, the control target value may be set by the kick down mode that is set furthest to the Top side among the plurality of levels of kick down modes.

Furthermore, for example, if acceleration is performed after the throttle is fully closed during control of the kick down mode, the control target value may be set by the kick down mode, among the plurality of levels of kick down modes, that is set further to the Top side than the kick down mode used immediately prior to acceleration after the throttle is fully closed.

In addition, the control device may perform control such that the control target value is set such that an engine speed control target value does not temporarily fall immediately after acceleration if acceleration is performed after the throttle is fully closed during control of the kick down mode.

Furthermore, if the kick down mode set in the control device sets the control target value based on an engine speed, the control device may perform control such that, if acceleration is performed after the throttle is fully closed during control of the kick down mode, when accelerating, if an engine speed control target value set by the kick down mode is small as compared to the engine speed control target value set immediately prior to acceleration and the throttle is not fully open, the engine speed control target value set immediately prior to acceleration continues to be used until the given engine speed control target value becomes higher than the engine speed control target value set immediately prior to acceleration.

In addition, the control device may perform control such that the control target value is set not to temporarily vary to the Top side immediately after acceleration if acceleration is performed after the throttle is fully closed during control of the kick down mode.

Moreover, the control device may perform control such that if acceleration is performed after the throttle is fully closed during control of the kick down mode, and when the control target value set by the kick down mode used when accelerating is to the Top side of the control target value used immediately prior to acceleration, and the throttle is not fully open, the control target value used immediately prior to acceleration continues to be used until, when accelerating, the control target value set by the kick down mode passes to the Low side of the control target value used immediately prior to acceleration.

The above continuously variable transmission may be applied as a continuously variable transmission in a straddle-type vehicle provided with an engine having an output controlled in accordance with operation of an accelerator operation member, the continuously variable transmission connected to the engine, and a control device that controls a speed change ratio of the continuously variable transmission.

The present invention may relate to a continuously variable transmission having a speed change ratio that is controlled by a control device, and which comprises:
a kick down operation member, wherein
the control device is set with a normal mode that sets a control target value, a kick down mode that sets the control target value further to a Low side than the normal mode, and a limit value of the control target value used during re-acceleration, and
in response to operation of the kick down operation member, the control target value is set by the kick down mode instead of the normal mode, and if acceleration is performed after a throttle is fully closed during control of the kick down mode, the control target value is set so as not to pass to the Low side of the limit value of the control target value used during re-acceleration.

The present invention may relate to a continuously variable transmission having a speed change ratio that is controlled by a control device, and which comprises:
a kick down operation member, wherein
the control device is set with a normal mode that sets a control target value, and kick down modes that set the control target value further to a Low side than the normal mode, and
in response to operation of the kick down operation member, the control target value is set by the kick down modes instead of the normal mode, and
if acceleration is performed after a throttle is fully closed during control of the kick down mode, the control target value is set by the kick down mode, among the plurality of levels of kick down modes , that is set furthest to the Top side.

The present invention may relate to a continuously variable transmission having a speed change ratio that is controlled by a control device, and which comprises:
a kick down operation member, wherein
the control device is set with a normal mode that sets a control target value, and kick down modes that set the control target value further to a Low side than the normal mode, and
in response to operation of the kick down operation member, the control target value is set by the kick down modes instead of the normal mode, and
if acceleration is performed after a throttle is fully closed during control of the kick down mode, the control target value is set by the kick down mode, among the plurality of levels of kick down modes, that is set further to the Top side than the kick down mode used immediately prior to accelerating after the throttle is fully closed.

The present invention may relate to a straddle-type vehicle including an engine having an output controlled in accordance with operation of an accelerator operation member, a continuously variable transmission that is connected to the engine, and a control device that controls a speed change ratio of the continuously variable transmission, the straddle-type vehicle comprising:
a kick down operation member that is provided separately from the accelerator operation member, wherein
the control device is set with a normal mode that sets a control target value, a kick down mode that sets the control target value further to a Low side than the normal mode, and a limit value of the control target value used during re-acceleration, and
the control device performs control such that
in response to operation of the kick down operation member, the control target value is set by the kick down mode instead of the normal mode, and if acceleration is performed after a throttle is fully closed during control of the kick down mode, the control target value is set so as not to pass to the Low side of the limit value of the control target value used during re-acceleration.

The present invention may relate to a straddle-type vehicle including an engine having an output controlled in accordance with operation of an accelerator operation member, a continuously variable transmission that is connected to the engine, and a control device that controls a speed change ratio of the continuously variable transmission, the straddle-type vehicle comprising:
a kick down operation member that is provided separately from the accelerator operation member, wherein
the control device is set with a normal mode that sets a control target value, and kick down modes that set the control target value further to a Low side than the normal mode, and
the control device performs control such that
in response to operation of the kick down operation member, the control target value is set by the kick down modes instead of the normal mode, and
if acceleration is performed after a throttle is fully closed during control of the kick down mode, the control target value is set by the kick down mode, among the plurality of levels of kick down modes, that is set furthest to the Top side.

The present invention may relate to a straddle-type vehicle including an engine having an output controlled in accordance with operation of an accelerator operation member, a continuously variable transmission that is connected to the engine, and a control device that controls a speed change ratio of the continuously variable transmission, the straddle-type vehicle comprising:
a kick down operation member that is provided separately from the accelerator operation member, wherein
the control device is set with a normal mode that sets a control target value, and kick down modes that set the control target value further to a Low side than the normal mode, and the control device performs control such that in response to operation of the kick down operation member, the control target value is set by the kick down mode instead of the normal mode, and
if acceleration is performed after a throttle is fully closed during control of the kick down mode, the control target value is set by the kick down mode, among the plurality of levels of kick down modes, that is set further to the Top side than the kick down mode used immediately prior to acceleration after the throttle is fully closed.

The control device may perform control such that, in response to operation of the kick down operation member, the control target value is set by the kick down mode instead of the normal mode, and if acceleration is performed after a throttle is fully closed during control of the kick down mode, the control target value is set so as not to pass to the Low side of the limit value of the control target value used during re-acceleration. As a result, the control device appropriately controls the continuously variable transmission when accelerating after the throttle is fully closed, thereby inhibiting unrequired engine racing.

Furthermore, the control device may perform control such that, if acceleration is performed after the throttle is fully closed during control of the kick down mode, the control target value is set by the kick down mode, among the plurality of levels of kick down modes, that is set further to the Top side than the kick down mode used immediately prior to acceleration after the throttle is fully closed. With this configuration, it is possible to further use kick down control when accelerating after the throttle is fully closed. In addition, in the case that the control device performs control such that the control target value is set such that an engine speed control target value does not temporarily fall immediately after acceleration if acceleration is performed after the throttle is fully closed during control of the kick down mode, it is possible to achieve smoother acceleration.

### BRIEF DESCRIPTION OF THE DRAWINGS

These and other aspects and features of the present invention will now be described, by way of example only, with reference to the accompanying drawings, in which:
FIG. 1 shows a continuously variable transmission according to an embodiment of the invention;
FIG. 2 is a side view showing a straddle-type vehicle according to the embodiment of the invention;
FIG. 3 (a) shows the continuously variable transmission according to the embodiment of the invention when it is in a low gear (Low), FIG. 3(b) shows a primary sheave thereof, and FIG. 3(c) shows a secondary sheave thereof;
FIG. 4 (a) shows the continuously variable transmission according to the embodiment of the invention when it is in a top gear (Top), FIG. 4(b) shows a primary sheave thereof, and FIG. 4(c) shows a secondary sheave thereof;
FIG. 5 shows a target value setting program (map) set in a control device of the continuously variable transmission according to the embodiment of the invention;
FIG. 6 is a flow chart that shows a first control of the continuously variable transmission according to the embodiment of the invention;
FIG. 7 is a flow chart that shows a second control of the continuously variable transmission according to the embodiment of the invention;
FIG. 8 shows a target value setting program (map) set in the control device of the continuously variable transmission according to the embodiment of the invention;
FIG. 9 is a flow chart that shows a third control of the continuously variable transmission according to the embodiment of the invention; and
FIG. 10 shows a continuously variable transmission according to another embodiment of the invention.

### DETAILED DESCRIPTION OF THE DRAWINGS

Hereinafter, a straddle-type vehicle that is equipped with a continuously variable transmission according to an embodiment of the invention will be described with reference to the drawings. Note that, the invention is not limited to the following embodiment.

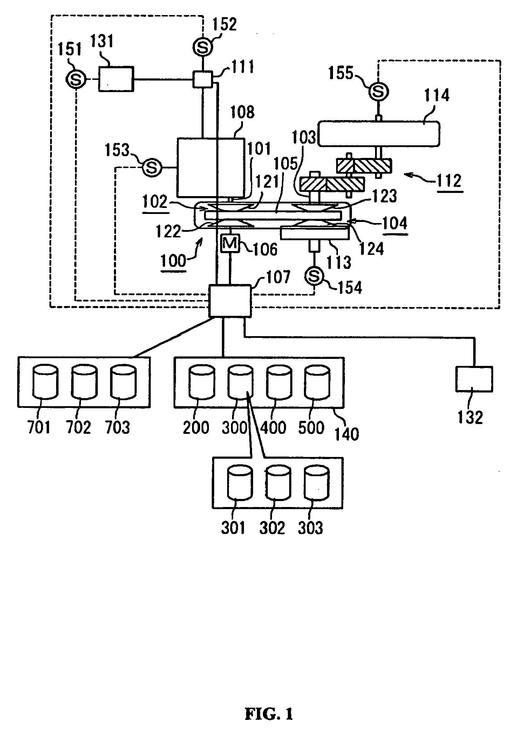

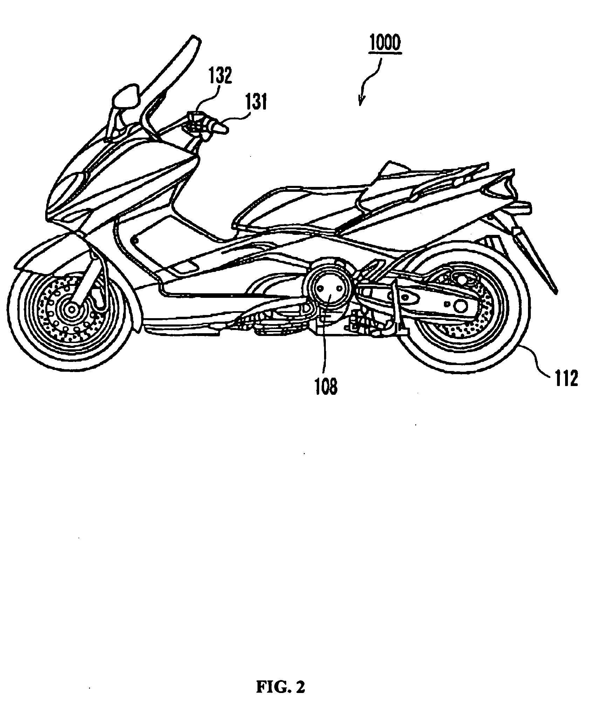

FIG. 1 shows an outline of the structure of a continuously variable transmission 100. The continuously variable transmission 100, as can be seen from FIG. 1, includes a primary shaft 101 (crank shaft), a primary sheave 102, a secondary shaft 103, a secondary sheave 104, a V-belt 105, an actuator (motor) 106, and a control device 107. The continuously variable transmission 100 is mounted in a straddle-type vehicle 1000 as shown in FIG. 2. In FIG. 1, reference numeral 108 denotes an engine, 111 denotes a throttle valve, 112 denotes a speed reduction mechanism, 113 denotes a clutch, and 114 a driving wheel.

In this embodiment, driving force generated by the engine 108 is transmitted to the driving wheel 114 (rear wheel) via the continuously variable transmission 100 and the speed reduction mechanism 112. In this embodiment, the clutch 113 is a centrifugal clutch. When the vehicle speed becomes roughly less than a determined value during deceleration, transmission of power from the continuously variable transmission 100 to the secondary shaft 103 is disengaged.

The continuously variable transmission 100, as shown in FIG. 1, includes the primary sheave 102 that is attached to the primary shaft 101, the secondary sheave 104 that is attached to the secondary shaft 103, and the V-belt 105 that is wound around the primary sheave 102 and the secondary sheave 104.

The primary sheave 102 includes a fixed flange 121 and a moveable flange 122. The groove width of the primary sheave 102 can be adjusted by the motor 106 that is controlled by the control device 107. The secondary sheave 104 includes a fixed flange 123 and a moveable flange 124. A spring (not shown in the figures) is incorporated within the secondary sheave 104, and functions to adjust groove width in accordance with the groove width of the primary sheave 102.

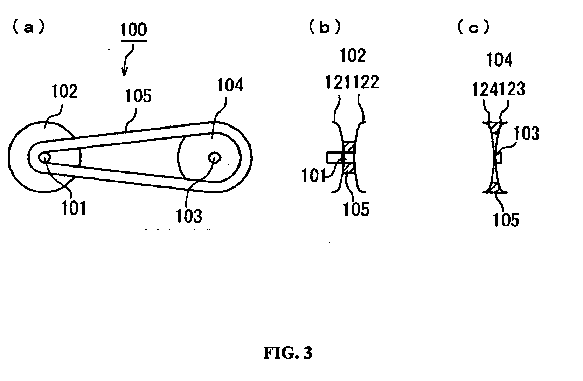

FIG. 3(a) shows the continuously variable transmission 100 when it is in a low gear (Low). In the primary sheave 102, as can be seen from FIG. 3(b), a gap between the fixed flange 121 and the moveable flange 122 is large, and the V-belt 105 is positioned to the inner circumferential side (in the vicinity of the primary shaft 101) of the primary sheave 102. On the other hand, in the secondary sheave 104, as can be seen from FIG. 3(c), a gap between the fixed flange 123 and the moveable flange 124 is small, and the V-belt 105 is positioned at the outer circumferential side of the secondary sheave 104. In this state, rotation of the primary shaft 101 has its speed reduced, and is transmitted to the secondary shaft 103. Thus, in this state, a low speed, comparatively large driving force is transmitted.

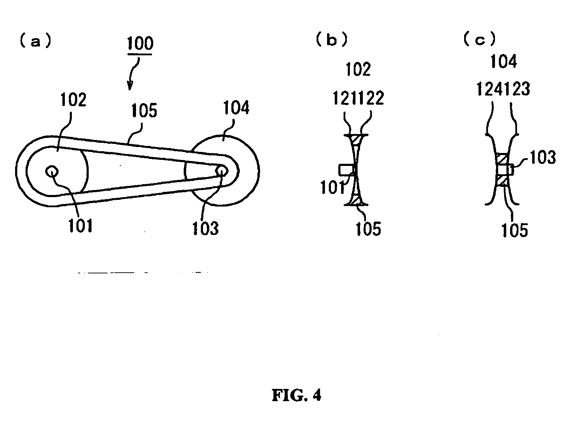

FIG. 4(a) shows the continuously variable transmission 100 when it is in a top gear (Top). In the primary sheave 102, as can be seen from FIG. 4(b), the gap between the fixed flange 121 and the moveable flange 122 is small, and the V-belt 105 is positioned to the outer circumferential side of the primary sheave 102. On the other hand, in the secondary sheave 104, as can be seen from FIG. 4(c), the gap between the fixed flange 123 and the moveable flange 124 is large, and the V-belt 105 is positioned at the inner circumferential side (in the vicinity of the secondary shaft 103) of the secondary sheave 104. In this state, rotation of the primary shaft 101 has its speed increased, and is transmitted to the secondary shaft 103. Thus, in this state, a high speed, comparatively small driving force is transmitted.

The continuously variable transmission 100 drives the motor 106, in accordance with a target value setting program that is pre-set in the control device 107, and thereby adjusts the groove width of the primary sheave 102 to adjust the speed change ratio. Kick down takes place when a down shift is performed in accordance with the rider's intentions, and is achieved using control based on the target value setting program.

The inventor has confirmed that, when using a V-belt type continuously variable transmission 100 provided with kick down of this type, if kick down is performed when accelerating again after deceleration, there are occasions when unrequired racing of the engine causes an un-smooth acceleration feeling.

The above-described problem has no detrimental affect of the safety of the straddle-type vehicle. However, the inventor has devised various types of modification of the continuously variable transmission that address the above-described problem and that promote improved ride comfort and maneuverability.

The modification of the continuously variable transmission according to the embodiment of the invention will now be explained.

Referring to FIG. 2, in this embodiment, the straddle-type vehicle 1000 includes an accelerator operation member 131, and a kick down operation member 132.

The accelerator operation member 131 is an operation member that is used by the rider to control the output of the engine 108. In this embodiment, the accelerator operation member 131 is formed by either an accelerator attached to a handle, or an accelerator grip. The control device 107, as can be seen from FIG. 1, controls the opening degree of the throttle valve 111 in accordance with the operation of the accelerator operation member 131, thereby controlling the output of the engine 108.

The kick down operation member 132 is operated by the rider, and is an operation member that performs a kick down mode, described hereinafter. In this embodiment, the kick down operation member 132 is provided separately from the accelerator operation member 131, and may be, for example, a button, namely, a kick down button (KD button), that is located at a position that takes into consideration rider operability and that is easy for the rider to operate. The control device 107 executes the kick down mode in accordance with the operation of the kick down operation member 132 by the rider.

The continuously variable transmission 100, as shown in FIG. 1, is connected to the engine 108, and is provided with the control device 107.

The control device 107 controls the continuously variable transmission 100 based on a control target value.

More particularly, in this embodiment, the control device 107 is a micro computer including a CPU, a ROM, a RAM, and a timer, and is provided with a memory portion that memorizes or stores data, programs and the like, and a processing portion that performs processing such as computation in accordance with the programs.

In this embodiment, the control device 107, as shown in FIG. 1, is electronically connected to various sensors such as an accelerator operation sensor 151, a throttle opening degree sensor 152, an engine speed sensor 153, a secondary sheave rotation speed sensor 154, and a vehicle speed sensor 155, and obtains required information about the states of various variables of the straddle-type vehicle from the different types of sensor.

Amongst these sensors, the accelerator operation sensor 151 is a sensor that detects information about the operation of the accelerator operation member 131. The throttle opening degree sensor 152 is a sensor that detects a throttle opening degree. In this embodiment, the throttle opening degree sensor 152 is provided in the vicinity of a support shaft of the throttle valve 111, and detects a rotational angle of the throttle valve 111 as the throttle opening degree. The engine speed sensor 153 is a sensor that detects the engine speed. In this embodiment, the engine speed sensor 153 is provided in the vicinity of the crank shaft (the primary shaft 101) of the engine 108 to detect the engine speed. The secondary sheave rotation speed sensor 154 is a sensor that detects the rotation speed of the secondary sheave 104. In this embodiment, the secondary sheave rotation speed sensor 154 is provided in the vicinity of the secondary shaft 103, and detects the rotation speed of the secondary sheave 104. In addition, the vehicle speed sensor 155 is a sensor that detects the running speed of the straddle-type vehicle 1000. In this embodiment, the vehicle speed sensor 155 is provided on a drive shaft of the driving wheel 114, and detects the rotation speed of the drive shaft of the driving wheel 114. For example, the vehicle speed (the running speed) of the straddle-type vehicle 1000 may be detected based on the rotation speed of the drive shaft of the driving wheel 114 detected by the vehicle speed sensor 155.

A normal mode 200, a kick down mode 300, and a limit value 400 that is a control target value used when re-accelerating are memorized or stored in the control device 107. Furthermore, in this embodiment, a limit value 500 that is used when the throttle is fully closed is also memorized or stored in the control device 107. Note that, in this embodiment, the control device 107 is provided with a target value setting portion 140 that sets a control target value that controls the continuously variable transmission 100. The target value setting portion 140 is provided in the above-described memory portion of the control device 107. The normal mode 200, the kick down mode 300, the limit value 400 that is the control target value used when re-accelerating, and the limit value 500 that is used when the throttle is fully closed are respectively set in the target value setting portion 140.

In this embodiment, the normal mode 200 sets the control target value that is used during normal running when kick down is not being performed. The kick down mode 300 sets the control target value when kick down is being performed such that the control target value is Low as compared to the normal mode 200. The normal mode 200 and the kick down mode 300 are respectively memorized in the memory portion of the control device 107, and are programs that set the control target value for the control device 107.

The normal mode 200 and the kick down mode 300 respectively determine the control target value based on the vehicle information from the throttle opening degree sensor 152, the engine speed sensor 153, the secondary sheave rotation speed sensor 154, and the vehicle speed sensor 155, etc. The control device 107 drives the motor 106 based on the above-described control target value, thereby controlling the groove width of the primary sheave 102.

In addition, in this embodiment, the normal mode 200 sets the control target value to an engine speed for a vehicle speed and controls the speed change ratio of the continuously variable transmission 100 such that the given control target value is achieved. The kick down mode 300 multiplies the target value for the engine speed set by the normal mode 200 by a pre-determined constant ratio (a down ratio), thereby setting the control target value to be Low as compared to the normal mode 200.

In response to operation of the kick down operation member 132, the control device 107 sets the control target value using the kick down mode 300 instead of using the normal mode 200 set in the target value setting portion 140.

The limit value 400 of the control target value used during re-acceleration is set to a limit value that limits the control target value of the continuously variable transmission 100 that is set when accelerating after the throttle is fully closed. Here, the phrase "accelerating after the throttle is fully closed" indicates, more specifically, performing an operation in which, after the throttle (accelerator) has been closed to reduce speed, the throttle (accelerator) is opened to accelerate.

In this embodiment, the limit value 400 of the control target value used during re-acceleration functions when the control target value is set by the kick down mode. More specifically, in the normal mode 200 in this embodiment, taking into consideration fuel efficiency performance etc., the control target value of the continuously variable transmission 100 is set such that racing of the engine does not occur. In contrast to this, the kick down mode 300 sets the target value by multiplying the speed change characteristic (speed change ratio) of the normal mode 200 by the constant ratio. As a result, the problem of engine racing can occur.

The limit value 400 of the control target value used during re-acceleration is set to a control target value that suitably controls the continuously variable transmission 100 such that racing of the engine does not occur. Note that, here, the phases "limit value 400 of the control target value used during re-acceleration" indicates a control target value that suitably controls the continuously variable transmission such that the above-described engine racing is inhibited. The phrase does not signify an engine limiter.

For example, the limit value 400 of the control target value used during re-acceleration may be set based on pre-testing of the same model of straddle-type vehicle mounted with the continuously variable transmission 100, and set to a control target value that will suitably control the continuously variable transmission 100 such that engine racing does not occur when re-accelerating after the throttle is completely closed.

In addition, in this embodiment, the limit value 500 that is used when the throttle is fully closed is also set. The limit value 500 that is used when the throttle is fully closed is set to a limit value that limits the control target value of the continuously variable transmission 100 that is set when the throttle is fully closed. Here, the phrase "throttle is fully closed" indicates a state where the throttle is shut.

In this embodiment, the limit value 500 that is used when the throttle is fully closed is set in advance while taking into consideration the effectiveness of inhibiting slip of the primary sheave 102 and the V-belt 105 of the continuously variable transmission 100 that results from the action of engine brake when decelerating with the throttle (accelerator) closed. The above-described limit value may be set while taking into consideration the results of, for example, simulations or tests on the actual device. Note that, although in this embodiment the above-described limit value 500 used when the throttle is fully closed is set, the limit value 500 that is used when the throttle is fully closed need not be set.

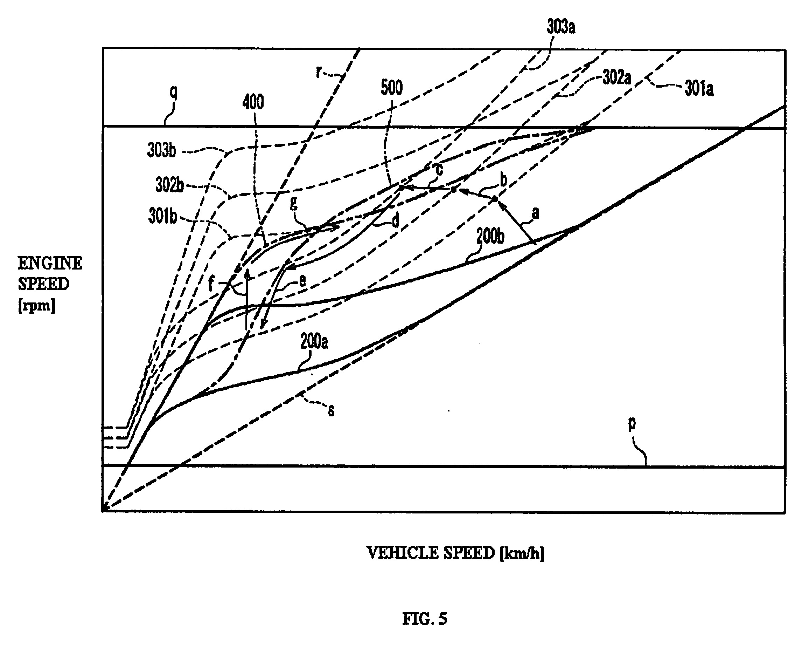

FIG. 5 shows the normal mode 200, the kick down mode 300, the limit value 400 of the control target value used during re-acceleration, and the limit value 500 that is used when the throttle is fully closed that are set in the target value setting portion 140. FIG. 5 shows the relationship of the speed (target value) of the engine 108 with respect to the vehicle speed for each of the target value setting programs.

More particularly, the vertical axis of FIG. 5 shows the engine speed, and the horizontal axis shows the vehicle speed. As can be seen from FIG. 5, if the vehicle speed is the same, as the engine speed becomes higher, the speed change ratio of the continuously variable transmission is controlled to change toward the Low side. In addition, if the engine speed is the same, as the vehicle speed becomes slower, the speed change ratio of the continuously variable transmission is controlled to change toward the Low side.

The speed of the engine 108 can be derived, for example, using computation based on the detection signal of the engine speed sensor 153. The vehicle speed can be derived, for example, using computation based on the detection signal of the secondary sheave rotation speed sensor 154 or the vehicle speed sensor 155.

The p shown in FIG. 5 indicates a lower limit of the engine speed, and the q indicates an upper limit of the engine speed. Furthermore, the r shown in FIG. 5 indicates the relationship between the vehicle speed and the speed of the engine 108 when the groove width of the primary sheave 102 is furthest to the Low side. Moreover, the s indicates the relationship between the vehicle speed and the speed of the engine 108 when the groove width of the primary sheave 102 is furthest to the Top side.

The above-described normal mode 200 is operative between 200a and 200b in FIG. 5. 200a in FIG. 5 indicates the control target value of the engine speed that is set when the throttle is fully closed when running normally when kick down control is not being performed. Moreover, 200b indicates the control target value of the engine speed that is set when the throttle is fully open when running normally when kick down control is not being performed.

Note that, here, the phrase "when the throttle is fully closed" indicates a state when the throttle (accelerator) is shut, and the phrase "when the throttle is fully open" indicates a state when the throttle (accelerator) is open as far as possible. In this embodiment, the states "when the throttle is fully closed" and "when the throttle is fully open", in the control device, are determined based on operating information of the accelerator operation member obtained from the accelerator operation sensor 151. Note that, if the throttle valve moves in association with operation of the accelerator, the states may be determined using the throttle opening degree sensor 152 that detects the opening degree of the throttle valve.

In addition, in this embodiment, the above-described kick down mode 300 is set with a plurality of levels of kick down mode 300 (3 levels in the example of the figure) that set the control target value progressively further to the Low side of the normal mode 200.

A first kick down mode 301 is a kick down mode among the plurality of levels of the kick down mode 300 that sets the control target value furthest to the Top side. In this embodiment, the first kick down mode 301 sets the control target value between 301a and 301b shown in FIG. 5. 301a indicates the control target value of the engine speed that is set under the control of the first kick down mode 301 when the throttle is fully closed. Furthermore, 301b indicates the control target value of the engine speed that is set under the control of the first kick down mode 301 when the throttle is fully open. Note that, in the example shown in FIG. 5, a section of the control target value 301b of the engine speed that is set under the control of the first kick down mode 301 when the throttle is fully open, and a section of the limit value 400 of the control target value used when re-accelerating are the same.

A second kick down mode 302 is a kick down mode that sets the control target value further to the Low side than the first kick down mode 301. In this embodiment, the second kick down mode 302 sets the control target value between 302a and 302b shown in FIG. 5. 302a indicates the control target value of the engine speed that is set under the control of the second kick down mode 302 when the throttle is fully closed. Furthermore, 302b indicates the control target value of the engine speed that is set under the control of the second kick down mode 302 when the throttle is fully open.

A third kick down mode 303 is a kick down mode that sets the control target value further to the Low side than the second kick down mode 302. In this embodiment, the third kick down mode 303 sets the control target value between 303a and 303b shown in FIG. 5. 303a indicates the control target value of the engine speed that is set under the control of the third kick down mode 303 when the throttle is fully closed. Furthermore, 303b indicates the control target value of the engine speed that is set under the control of the third kick down mode 303 when the throttle is fully open.

Note that, FIG. 5 is intended to make understanding of the normal mode 200 and the kick down modes 300 easier. Note that, as described above, in this embodiment, each kick down mode 300 sets the control target value further to the Low side than the normal mode 200 by multiplying the target value of the engine speed set in the normal mode 200 by a pre-determined constant ratio (a down ratio).

Moreover, as described above, 400 shown in FIG. 5 indicates the limit value of the control target value that is used during re-acceleration. Moreover, as described above, 500 indicates the limit value that is used when the throttle is fully closed.

The target value setting portion 140 sets the control target value using the kick down mode 300 instead of the normal mode 200 set in the target value setting portion 140, in accordance with the operation of the kick down operation member 132. Then, if the vehicle accelerates after the throttle has been fully closed during control of the kick down mode 300, the target value setting portion 140 sets the control target value such that it does not go beyond the limit value of the control target value used during re-acceleration to the Low side.

In this embodiment, the plurality of levels of kick down mode (301, 302, 303) are set. Furthermore, one of the kick down modes among the plurality of levels of the kick down mode (301, 302, 303) is used in accordance with the operation of the kick down operation member 132. More particularly, in this embodiment, each time the rider operates the kick down operation member 132, the kick down mode that sets the control target value progressively to the Low side is used in accordance with the rider's operation, thereby gradually performing down shift.

When the above-described normal mode 200 or the kick down mode (301, 302, 303) is used, the control target value of the engine speed is derived using computation based on information for the vehicle speed and the throttle opening degree.

More particularly, the position on the horizontal axis of FIG. 5 is determined based on the information for vehicle speed. In addition, the control target value of the engine speed is set between the control target value used when the throttle is fully closed (200a, 301a, 302a, 303a) and the control target value used when the throttle is fully open (200b, 301b, 302b, 303b) by multiplication using a determined coefficient that corresponds with the throttle (accelerator) opening degree. In this case, as the throttle opening degree becomes smaller, the control target value is set nearer to the control target value (200a, 301a, 302a, 303a) used when the throttle is fully closed. Further, as the throttle opening degree becomes larger, the control target value is set nearer to the control target value (200b, 301b, 302b, 303b) used when the throttle is fully open.

The control device 107 uses information about temporal changes in the vehicle speed and the throttle opening degree to repeatedly perform computation and continually update the control target value of the engine speed, thereby controlling the speed change ratio of the continuously variable transmission 100.

In this embodiment, in order to inhibit engine racing, and achieve smooth acceleration when accelerating after the throttle has been fully closed, the control device 107 performs a first control 701, a second control 702, and a third control 703.

In the first control 701, the target value setting portion 140 sets the control target value such that the limit value 400 of the control target value used during re-acceleration is not passed to the Low side when accelerating after the throttle has been fully closed during control of the kick down mode 300.

In this embodiment, in the first control 701, when the control target value is set by the kick down mode 300 to be further to the Top side than the limit value 400 of the control target value used during re-acceleration, this control target value is set as the control target value. However, when the control target value is set by the kick down mode 300 to be further to the Low side than the limit value 400 of the control target value used during re-acceleration, the limit value 400 of the control target value used during re-acceleration is set at the control target value.

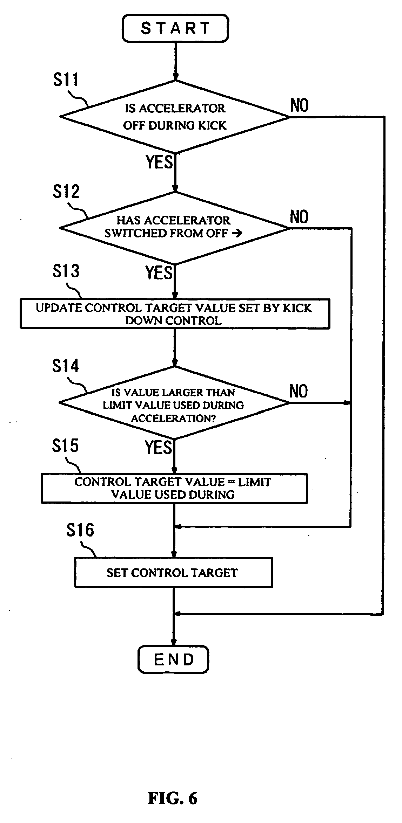

The control flow of the above-described first control 701 will now be explained with reference to FIG. 6.

In the first control 701, first, at determination step (S11), it is determined whether or not the accelerator is OFF during control of the kick down mode 300. It may be determined whether or not the kick down mode 300 is presently performing control based on, for example, information about the performance of the kick down control that accords with the operation of the kick down operation member 132. In addition, it may be determined whether or not the accelerator is OFF based on information from the accelerator operation sensor 151 or the like.

If YES is determined at determination step (S11), then the routine proceeds to the next determination step (S12). However, if NO is determined at determination step (S11), the first control 701 is ended.

At determination step (S12), it is determined whether or not the vehicle is accelerating after the throttle has been fully closed. In the example in FIG. 6, it is determined whether or not the vehicle is accelerating after the throttle has been fully closed based on whether or not switching from accelerator OFF to accelerator ON has taken place. Whether or not switching from accelerator OFF to accelerator ON has taken place is determined based on information from the accelerator operation sensor 151.

If NO is determined at determination step (S12), step (S16) described hereinafter is performed in which the control target value of the engine speed set in the kick down mode when the throttle is fully closed is set as the final control target value of the engine speed. If YES is determined at determination step (S12), the routine proceeds to the next step (S13).

At step (S13), the control target value set by the kick down mode 300 is updated. More specifically, in this embodiment, at step (S13), the control target value of the engine speed set by the kick down mode 300 used when the accelerator was switched to ON is computed, and set as the updated control target value. Then, determination step (S14) is performed.

At determination step (S14), it is determined whether or not the control target value of the engine speed updated at step (S13) is larger than the limit value 400 of the control target value used during re-acceleration. In other words, it is determined whether or not the control target value set by the kick down mode 300 is further to the Low side than the limit value 400 of the control target value used during re-acceleration.

If NO is determined at determination step (S14), the control target value of the engine speed updated at step (S13) is not larger than the limit value 400 of the control target value used during re-acceleration. In this case, the given control target value updated at (S13) is set as the control target value (S16).

If YES is determined at determination step (S14), the control target value of the engine speed updated at step (S13) is larger than the limit value 400 of the control target value used during re-acceleration. In this case, step (S15) is performed. Step (S15) is a step that sets the limit value 400 of the control target value used during re-acceleration as the control target value. In other words, instead of the control target value of the engine speed set by the kick down mode 300, the limit value 400 of the control target value used during re-acceleration is set as the control target value. Thus, as a result of step (S15), the limit value 400 of the control target value used during re-acceleration becomes the control target value.

At step (S16), the control target value of the continuously variable transmission 100 is set based on the processing of the above-described step (S12), step (S14) and step (S15).

The first control 701 will now be explained with reference to FIG. 5.

Referring to FIG. 5, when, for example, the throttle is closed to decelerate during normal running (under control of the normal mode) when kick down control is not being performed, the rider may sometimes repeatedly operate the kick down operation member 132 in order to increase the effect of engine braking.

For example, if kick down control is performed three times, as indicated by the arrows a-c shown in FIG. 5, the used kick down control will shift from the first kick down mode 301, to the second kick down mode 302, to the third kick down mode 303. Then, as shown by arrow d, the control target value will continue to be set in accordance with the third kick down mode 303 while the vehicle decelerates.

In this embodiment, as described above, the limit value 500 that is used when the throttle is fully closed is set. The control device 107 sets the control target value of the continuously variable transmission 100 to the limit value 500 that is used when the throttle is fully closed if, when the throttle is closed to decelerate, the control target value of the continuously variable transmission 100 set by the kick down mode 300 passes to the Low side of the limit value 500 that is used when the throttle is fully closed.

Thus, in this embodiment, under control of the third kick down mode 303, if the control target value 303a of the engine speed set when the throttle is fully closed reduces to a vehicle speed that passes to the Low side of the limit value 500 that is used when the throttle is fully closed, the limit value 500 that is used when the throttle is fully closed is set as the control target value of the continuously variable transmission 100. As a result, as shown by arrow e, the control target value of the continuously variable transmission 100 is set in line with the limit value 500 that is used when the throttle is fully closed.

The first control 701 is performed when accelerating after the throttle has been fully closed under control of the above-described kick down mode. Accordingly, as shown by arrow e, when the control target value is set in line with the limit value 500 that is used when the throttle is fully closed, and the accelerator is switched from OFF to ON, the first control 701 is performed.

When the accelerator is switched from OFF to ON, and the throttle is opened, the limit established by the limit value 500 that is used when the throttle is fully closed is deactivated. Thus, the control target value is set by the third kick down mode 303. As a result, the control target value of the engine speed increases as shown by arrow f.

At this time, if the control target value set by the third kick down mode 303 passes to the Low side of the limit value 400 of the control target value used during re-acceleration, the above-described first control 701 sets the limit value 400 of the control target value used during re-acceleration as the control target value. This is performed by the determination processing of determination step (S14) shown in FIG. 6. Accordingly, if the control target value set by the third kick down mode 303 passes to the Low side of the limit value 400 of the control target value used during re-acceleration, the limit value 400 of the control target value used during re-acceleration is set as the control target value as shown by arrow g in FIG. 5. Thus, the control target value of the continuously variable transmission 100 is not able to pass below and be set to the Low side of the limit value 400 of the control target value used during re-acceleration. Note that, in cases when the control target value set by the third kick down mode 303 does not pass to the Low side of the limit value 400 of the control target value used during re-acceleration, the control target value set by the third kick down mode 303 is set as the control target value.

As described above, in the first control 701, by the determination processing of determination step (S14), when the control target value set by the kick down mode 300 passes to the Top side of the limit value 400 of the control target value used during re-acceleration, the given control target value is set as the control target value. However, when the control target value set by the kick down mode 300 passes to the Low side of the limit value 400 of the control target value used during re-acceleration, the limit value 400 of the control target value used during re-acceleration is set as the control target value. As a result, the control target value is not able to pass below and be set to the Low side of the limit value 400 of the control target value used during re-acceleration. Therefore, when accelerating after the throttle has been fully closed under control of the kick down mode, the continuously variable transmission 100 can be controlled such that the limit value 400 of the control target value used during re-acceleration is not passed to the Low side, and thus engine racing can be inhibited.

Note that, in FIG. 5, when the throttle is closed to decelerate during normal running (under control of the normal mode) when kick down control is not being performed, the rider may sometimes repeatedly operate the kick down operation member 132 in order to increase the effect of engine brake. The above-described first control 701 can function in circumstances other than this. For example, the above-described first control 701 can also function when, under control of the kick down mode, the throttle (accelerator) is closed to decelerate, and then the throttle (accelerator) is opened to accelerate.

The above description completes the explanation of the first control 701. In the above embodiment, an example is described in which a plurality of levels of kick down mode are set in the target value setting portion 140. However, the above-described first control 701 controls the continuously variable transmission 100 such that the limit value 400 of the control target value used during re-acceleration is not passed to the Low side when accelerating after the throttle has been fully closed under control of the kick down mode. Accordingly, it is not essential that the plurality of levels of kick down modes are set in the target value setting portion 140.

The second control 702 will now be explained.

When a plurality of levels of kick down mode are set in the target value setting portion 140 as in the above-described embodiment, normally, when the vehicle accelerates after the throttle has been fully closed during control of the kick down mode, the kick down mode used before accelerating is maintained. At this time, if the kick down control has already been used multiple times prior to acceleration, there are occasions when use of another kick down is restricted after acceleration.

The second control 702 sets the control target value by using the kick down mode 300 that is set furthest to the Top side among the plurality of levels of the kick down mode 300 when accelerating after the throttle has been fully closed during control of the kick down mode 300. In other words, in this embodiment, when accelerating after the throttle has been fully closed during control of the kick down mode 300, the control target value is set by the kick down mode 300 that is set furthest to the Top side among the plurality of levels of kick down mode 300. As a result, after acceleration, it is possible to kick down again in response to the rider's request.

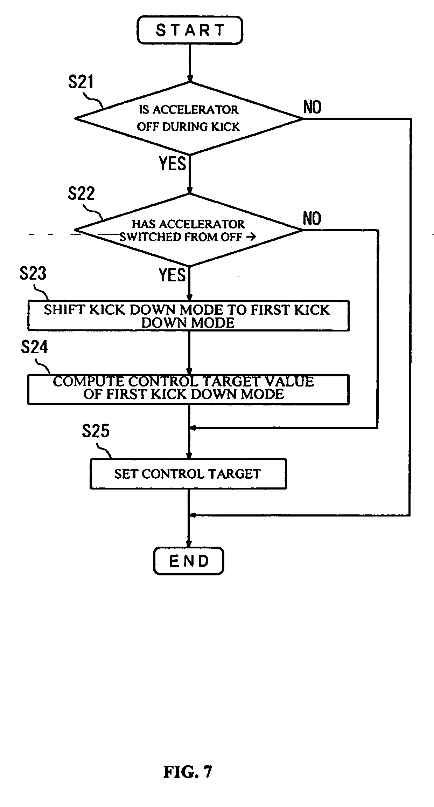

The control flow of the second control 702 will now be explained with reference to FIG. 7.

In the second control 702, first, at determination step (S21) it is determined whether or not the accelerator is OFF during control of the kick down mode 300. If YES is determined at determination step (S21), then the routine proceeds to the next determination step (S22). However, if NO is determined at determination step (S21), the second control 702 is ended.

At determination step (S22), it is determined whether or not the vehicle is accelerating after the throttle has been fully closed. Note that, in the example in FIG. 7, it is determined whether or not the vehicle is accelerating after the throttle has been fully closed, based on whether or not switching from accelerator OFF to accelerator ON has taken place.

If NO is determined at determination step (S22), the control target value set under the control of the given kick down mode is set as the final control target value (S25). If YES is determined at determination step (S22), the routine proceeds to the next step (S23).

At step (S23), the kick down mode shifts to the first kick down mode that is set furthest to the Top side among the plurality of levels of kick down mode (301, 302, 303). More particularly, in this embodiment, at step (S23), when the accelerator is switched to ON, the used kick down mode shifts to the first kick down mode 301 that is set furthest to the Top side among the plurality of levels of kick down mode (301, 302, 303). Then, the routine proceeds to step (S24).

At step (S24), the control target value is computed using the first kick down mode that was shifted to at step (S23) .

At step (S25), the control target value is set based on the processing at the above-described determination step (S22), and step (S24). More particularly, when it is determined that the vehicle is accelerating after the throttle has been fully closed at step (S22), the kick down mode shifts to the first kick down mode 301 at step (S23). Then, at step (S24), the control target value is computed by the first kick down mode 301, and at step (S25) the final control target value of the continuously variable transmission 100 is set.

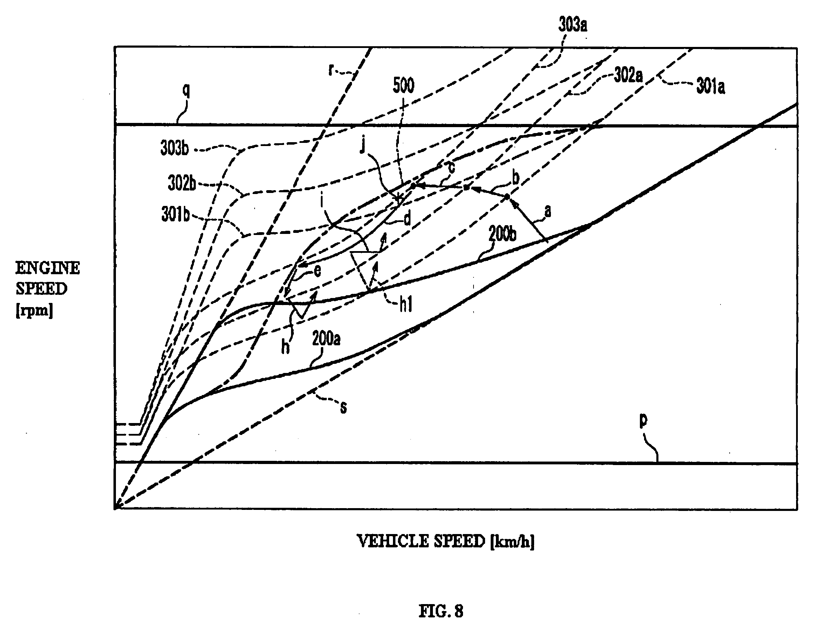

The second control 702 will now be explained with reference to FIG. 8.

In FIG. 8, when, for example, the accelerator is closed to decelerate during normal running, namely, under control of the normal mode 200 in this embodiment, when kick down control is not being performed, the rider may sometimes repeatedly operate the kick down operation member 132 in order to increase the effect of engine braking.

For example, if the kick down operation member 132 is operated three times, as indicated by the arrows a-c shown in FIG. 8, the used kick down mode will shift from the first kick down mode 301, to the second kick down mode 302, to the third kick down mode 303. Then, as shown by arrow d, the control target value will continue to be set in accordance with the third kick down mode 303 while the vehicle decelerates.

In this embodiment, as described above, the limit value 500 that is used when the throttle is fully closed is set. Thus, if the control target value 303a set by the third kick down mode 303 passes to the Low side of the limit value 500 that is used when the throttle is fully closed, the limit value 500 that is used when the throttle is fully closed is set as the control target value (arrow e).

The second control 702 is performed when accelerating after the throttle has been fully closed during control of the kick down mode. Accordingly, the second control 702 is performed when the accelerator is switched from OFF to ON when the control target value is set in line with the limit value 500 that is used when the throttle is fully closed as shown by arrow e.

When the accelerator is switched from OFF to ON, the throttle is opened, and the limit established by the limit value 500 that is used when the throttle is fully closed is deactivated. Then, as shown in FIG. 7, step (S23) is performed as a result of the determination of the determination step (S22) of the second control 702, whereby the kick down mode shifts to the first kick down mode 301. Then, the control target value is set by the first kick down mode 301 (S24, S25).

The control target value set by the first kick down mode 301 is determined by the extent of the operation of the accelerator operation member 131. Accordingly, for example, the control target value may be set as shown by the arrow h in FIG. 8.

If, at this time, the rider feels that torque is inadequate, he/she can operate the accelerator operation member 131 to increase the engine speed. Furthermore, the rider can operate the kick down operation member 132 to request another kick down. According to the second control, when accelerating, the kick down mode shifts from the third kick down mode 303 to the first kick down mode 301. Thus, in the case that the rider requests another kick down, the kick down mode shifts in sequence from the first kick down mode 301, to the second kick down mode 302, to the third kick down mode 303.

In this manner, in the second control 702, when accelerating after the throttle has been fully closed during control of the kick down mode 300, the control target value is set by the kick down mode that is set furthest to the Top side among the plurality of levels of kick down mode (301, 302, 303). As a result, after accelerating, it is possible to down shift in response to a request from the rider to kick down.

Moreover, as shown by arrow h in FIG. 8, the control target value of the engine speed set by the first kick down mode 301 is low as compared to the control target value of the engine speed set by the third kick down mode 303. As a result, it can be expected that the second control 702 will be effective in inhibiting engine racing.

Moreover, the second control 702 functions when accelerating after the throttle has been fully closed during control of the kick down mode 300. For example, as shown by the dot line arrow h1 shown in FIG. 8, the second control 702 can function when the throttle (accelerator) is opened to accelerate after the throttle (accelerator) has been closed to decelerate during control of the third kick down mode 303. In this case, as a result of using the second control 702, it is possible, after accelerating and once shifting to the first kick down mode 301 has taken place, to down shift in response to a request from the rider to kick down. Moreover, as a result of using the second control 702, the set control target value of the engine speed is low as compared to when control of the third kick down mode 303 is performed. Accordingly, it can be expected that the second control 702 will be effective in inhibiting engine racing.

The above description completes the explanation of the second control 702. The second control 702 may be modified in various ways.

For example, in the above description, an example is given in which at step (S23) in the control flow shown in FIG. 7, control is performed such that the kick down mode is shifted to the first kick down mode 301. However, instead of this, at step (S23), the kick down mode may be shifted to a kick down mode among the plurality of levels of kick down mode (301, 302, 303) that is set further to the Top side than the kick down mode being used immediately prior to acceleration after the throttle has been fully closed.

According to this control, after accelerating after the throttle has been fully closed, it is possible to down shift in response to a request from the rider for another kick down. Furthermore, as compared to the case of continuing to use the kick down mode used immediately prior to acceleration after the throttle has been fully closed, it is possible to inhibit unrequired engine racing.

Note that, in the case of accelerating after the throttle has been fully closed during control of the kick down mode 300, for example, the kick down control can be deactivated and the normal mode 200 used. However, in this control, since the kick down is deactivated against the wishes of the rider, it is not possible to obtain torque that satisfies the rider' s intentions when accelerating, and thus smooth acceleration is not achieved. The above-described second control 702 allows smooth acceleration to be achieved in line with the rider's intention, and allows unrequired engine racing to be inhibited.

Also, the continuously variable transmission 100 may be controlled using the second control in combination with the first control 701 that is set with the above-described limit value 400 of the control target value used during re-acceleration such that, when accelerating after the throttle has been fully closed, the limit value 400 of the control target value used during re-acceleration is not exceeded. Note that, it is not essential to use the second control in combination with the first control 701 that is set with the above-described limit value 400 of the control target value used during re-acceleration. In addition, it is not essential to set the limit value 500 that is used when the throttle is fully closed as described in the above embodiment.

The third control 703 will now be explained.

For example, when the above-described second control 702 functions, the kick down mode shifts to a kick down mode set further to the Top side. As a result, for example, if control shifts from control of the third kick down mode 303 to control of the first kick down mode 301 as shown by the arrow h1 in FIG. 8, the control target value of the engine speed becomes lower. Thus, in the case of accelerating after the throttle has been fully closed, when accelerating, the output torque is too small to satisfy the rider's intention, and thus it is possible that the vehicle will not smoothly accelerate as the rider intends. In the third control 703, the above-described difficulty that occurs when using the second control 702 is addressed, and control is performed such that the vehicle smoothly accelerates when accelerating after the throttle has been fully closed.

It is favorable that the third control 703 sets the control target value such that, for example, the control target value of the engine speed does not temporarily fall immediately after accelerating. In addition, for example, it is favorable that the third control 703 sets the control target value of the speed change ratio such that it does not temporarily vary to the Top side immediately after accelerating.

In this case, for example, a timer function of the control device 107 may be used to pre-set a time period. Then, the time period may be counted immediately following accelerating after the throttle has been fully closed, and the control target value of the continuously variable transmission may be maintained for the pre-set time period.

As a result, even if the second control 702 is being used, immediately after acceleration, the control target value of the continuously variable transmission 100 is not set excessively far to the Low side immediately after accelerating. Thus, when accelerating, it is possible to output torque that better matches the rider's intentions, and achieve smooth acceleration.

Hereinafter, one embodiment of the above third control 703 will be explained.

In this embodiment, when accelerating, if the control target value of the engine speed set by the kick down mode is low as compared to the control target value of the engine speed used immediately before accelerating and the throttle is not fully open, when accelerating, the control target value of the engine speed used immediately prior to acceleration is maintained until the control target value of the engine speed set by the kick down mode exceeds the control target value of the engine speed used immediately prior to acceleration.

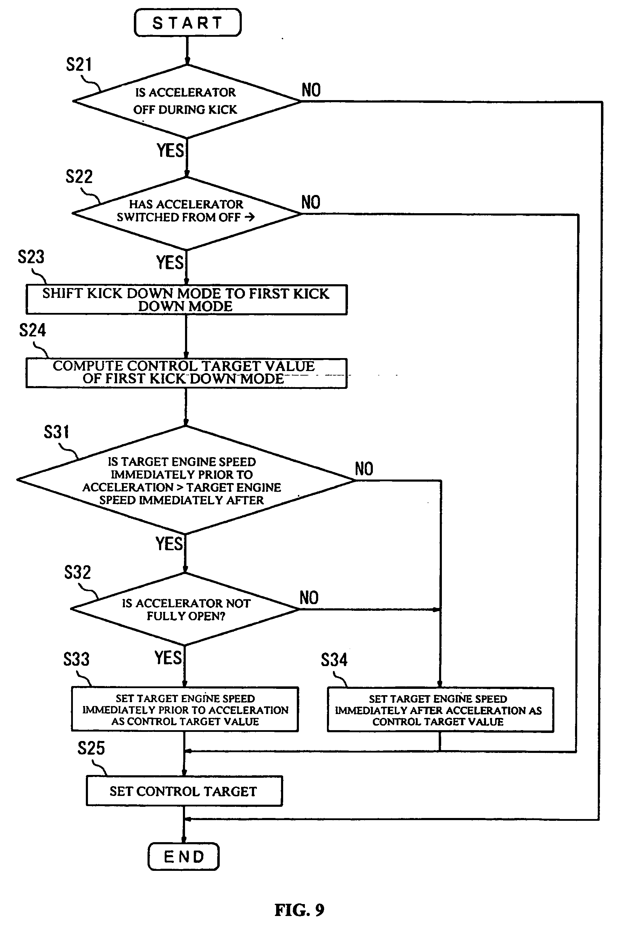

In this embodiment, the third control 703 can be set between, for example, step (S24) and step (S25) in the flow chart shown in FIG. 7 of the second control. FIG. 9 shows an example in which the third control 703 of this embodiment is set between step (S24) and step (S25) of FIG. 7.

In this embodiment, after step (S24), determination step (S31) is performed. At determination step (S31), it is determined whether or not the control target value of the engine speed set immediately prior to acceleration is higher than the control target value of the engine speed set by the kick down mode that is shifted to immediately after acceleration. Note that, in FIG. 9, for the sake of convenience, the control target value of the engine speed set immediately prior to acceleration is denoted as "target engine speed immediately prior to acceleration", and the control target value of the engine speed set by the kick down mode that is shifted to immediately after acceleration is denoted as "target engine speed immediately after acceleration".

If the control target value of the engine speed set immediately prior to acceleration is higher than the control target value of the engine speed set by the kick down mode that is shifted to immediately after acceleration, the determination at determination step (S31) is YES. If YES is determined at determination step (S31), the following step (S32) is performed.

At determination step (S32), it is determined whether or not the throttle (accelerator) is fully open. If the control target value of the engine speed set immediately prior to acceleration is higher than the control target value of the engine speed set by the kick down mode that is shifted to immediately after acceleration, and the throttle (accelerator) is not fully open, the determination of determination step (S32) is YES. If YES is determined at determination step (S32), the following step (S33) is performed.

At step (S33), the control target value of the engine speed set immediately prior to acceleration is set as the control target value.

In other words, when the control target value of the engine speed set immediately prior to acceleration is higher than the control target value of the engine speed set by the kick down mode that is shifted to immediately after acceleration, and the throttle (accelerator) is not fully open, the control target value of the engine speed set immediately prior to acceleration is set as the control target value.

On the other hand, if NO is determined at determination step (S31) or determination step (S32), in both cases step (S34) is performed.

In other words, when the control target value of the engine speed set immediately prior to acceleration is not higher than the control target value of the engine speed set by the kick down mode that is shifted to immediately after acceleration, step (S34) is performed. Moreover, when the control target value of the engine speed set immediately prior to acceleration is higher than the control target value of the engine speed set by the kick down mode that is shifted to immediately after acceleration, and the accelerator is fully open, step (S34) is performed in a similar manner.

At step (S34), the control target value of the engine speed set using the kick down mode shifted to immediately after acceleration is set as the control target value.

At step (S25), although not shown in the drawing, the control target value is set based on the processing of the above-described determination step (S22), step (S33) and step (S34).

FIG. 8 will now be used as a basis for explaining a situation where the second control 702 and the third control 703 are used. For example, when accelerating after the throttle has been fully closed, there are cases when the second control 702 sets the control target value of the engine speed as shown by arrow h1. In this case, the control target value of the engine speed set immediately prior to acceleration is higher than the control target value of the engine speed set by the kick down mode that is shifted to immediately after acceleration. As a result, the third control 703 functions. When the third control 703 functions, the control target value of the engine speed is maintained until the control target value of the engine speed set by the kick down mode that is shifted to immediately after acceleration becomes larger than the control target value of the engine speed set immediately prior to acceleration as shown by arrow i.

In this manner, if the third control 703 is used, the control target value of the continuously variable transmission 100 is not set excessively far to the Low side immediately after acceleration even when the second control 702 is being used. Accordingly, when accelerating, torque can be output that better matches the rider's intentions, thus allowing smooth acceleration to be achieved.

Note that, in the case that the control target value 303a of the engine speed set when the throttle is fully closed in the third kick down mode 303 is at a position higher than the control target value 301a of the engine speed set when the throttle is fully open in the first kick down mode 301, the situation is slightly different.

For example, let us consider the state indicated by j on the solid line 303a that indicates the control target value set when the throttle is fully closed by the third kick down mode 303.

In this situation, at the vehicle speed in the state indicated by j in FIG. 8, the control target value 303a set when the throttle is fully closed by the third kick down mode 303 is higher than the control target value 301a of the engine speed set when the throttle is fully open by the first kick down mode 301.

Next, let us consider the situation when, under control of the third kick down mode 303, the accelerator is closed to decelerate, and then the accelerator is fully opened to accelerate in the state indicated by j in FIG. 8.

If acceleration takes place in the state indicated by j in FIG. 8 after the accelerator has been closed to decelerate under control of the third kick down mode 303, the second control 702 will perform control to shift to the first kick down mode 301. Furthermore, in this embodiment, the third control 703 is used. The accelerator has been fully opened to accelerate in the state indicated by j, and thus the control target value of the engine speed set immediately prior to acceleration is higher than the control target value of the engine speed set by the kick down mode shifted to immediately after acceleration, and the accelerator is fully open. Accordingly, step (S34) is performed, and the control target value of the engine speed is set by the first kick down mode 301 shifted to immediately after acceleration. As a result, the control of the first kick down mode 301 is smoothly continued.

In the third control 703, even if the control target value is set by the kick down mode 300 set to the Top side immediately after acceleration by the second control 702, the control target value of the engine speed does not fall. As a result, smooth acceleration can be achieved immediately after acceleration.

The above-described embodiment explains an example of the third control 703 in which the control target value is set such that, when the control target value is set by the kick down mode 300 set to the Top side immediately after acceleration by the second control 702, the control target value of the engine speed does not fall. The above third control 703 may however set the control target value such that the control target value of the speed change ratio does not vary to the Top side.

As a specific embodiment of this, when the control target value of the speed change ratio set by the kick down mode used when accelerating is further to the Top side than the control target value of the speed change ratio used immediately prior to acceleration, and the throttle is not fully open, when accelerating, the control target value of the speed change ratio used immediately prior to acceleration may be maintained until the control target value of the speed change ratio set by the kick down mode passes to the Low side of the control target value of the speed change ratio used immediately prior to acceleration.

In this case, in the control flow shown in FIG. 9, at determination step (S31), it is determined whether or not the control target value of the speed change ratio of the continuously variable transmission 100 set immediately prior to acceleration is to the Low side of the control target value of the speed change ratio of the continuously variable transmission 100 set by the kick down mode shifted to immediately after acceleration.

Based on the result, if it is determined that the control target value of the speed change ratio set immediately prior to acceleration is to the Low side of the control target value of the speed change ratio set by the kick down mode shifted to immediately after acceleration, YES is determined at determination step (S31).

At determination step (S32), it is determined whether or not the accelerator is fully open. In the case that the control target value of the speed change ratio set immediately prior to acceleration is to the Low side of the control target value of the speed change ratio set by the kick down mode shifted to immediately after acceleration, and the accelerator is not fully open, YES is determined at determination step (S32).

At step (S33), the control target value set immediately prior to acceleration is set as the control target value.

As a result, when the control target value of the speed change ratio set immediately prior to acceleration is to the Low side of the control target value of the speed change ratio set by the kick down mode shifted to immediately after acceleration, and the accelerator is not fully open, the control target value set immediately prior to acceleration is set as the control target value.

On the other hand, at step (S34), the control target value set by the kick down mode shifted to immediately after acceleration is set as the control target value.

As a result, when the control target value of the speed change ratio set immediately prior to acceleration is not to the Low side of the control target value of the speed change ratio set by the kick down mode shifted to immediately after acceleration, the control target value set by the kick down mode shifted to immediately after acceleration is set as the control target value.

Moreover, when the control target value of the speed change ratio set immediately prior to acceleration is to the Low side of the control target value of the speed change ratio set by the kick down mode shifted to immediately after acceleration, and the accelerator is fully open, in a similar manner, the control target value is set by the kick down mode shifted to immediately after acceleration.

In this manner, the second control 702 and the third control 703 can be used to perform control using the control target value of the speed change ratio as a reference.

Hereinabove, the continuously variable transmission and the straddle-type vehicle according to one embodiment of the invention are explained. However, the continuously variable transmission and the straddle-type vehicle of the invention are not limited to the above-described embodiment.

For example, the described example includes the kick down mode set with the plurality of levels of kick down mode, and more particularly 3 levels of kick down mode. However, in the case that a plurality of levels of kick down mode is set, it is not essential for there to be three levels. In addition, the above first control 701 may be applied in a situation where a plurality of levels of kick down mode are not set.

Furthermore, in the above-described embodiment, the kick down mode is set based on multiplying the speed change characteristics of the normal mode by a constant ratio. However, a different technique may be used to set the kick down mode.

In addition, in the described example the control target value of the continuously variable transmission is the engine speed and the speed change ratio of the continuously variable transmission. However, the control target value of the continuously variable transmission is not limited to this.

Moreover, sensors that can detect when the throttle is fully closed and when the throttle is fully open may be used for the accelerator operation sensor 151, the throttle opening degree sensor 152 etc. Thus, it is not essential that the accelerator operation sensor 151, the throttle opening degree sensor 152, etc. are sensors that can determine the opening degree of the throttle.

Moreover, some straddle-type vehicles include two target value setting programs in the normal mode, namely, a drive mode and an assist mode, which are separate from the kick down mode. The drive mode is a mode that focuses on fuel consumption etc., and the assist mode is a mode that is a so-called "sports mode" that sets the speed change ratio to the Low side as compared to the drive mode. With this configuration, there are occasions when a kick down mode is further set for each of the drive mode and the assist mode. Even in such a configuration, the above-described limit value 500 that is used when the throttle is fully closed may be set to inhibit slipping of the primary sheave 102 and the V-belt 105 of the continuously variable transmission.

Also, in the above example a scooter motorcycle is described as the straddle-type vehicle. However, the straddle-type vehicle is not limited to this. Furthermore, the vehicle in which it is possible to mount the continuously variable transmission according to the invention is not limited to being a straddle-type vehicle. The continuously variable transmission according to the invention can be mounted in, for example, an SSV (side-by-side vehicle) that has seating for two people, or the like.

In addition, the structure of the continuously variable transmission is not limited to that described in the above embodiment. The invention may be applied to various types of continuously variable transmission that include a V-belt wound around a primary sheave and a secondary sheave, and in which the groove width of the primary sheave is adjusted by an actuator and a control device.

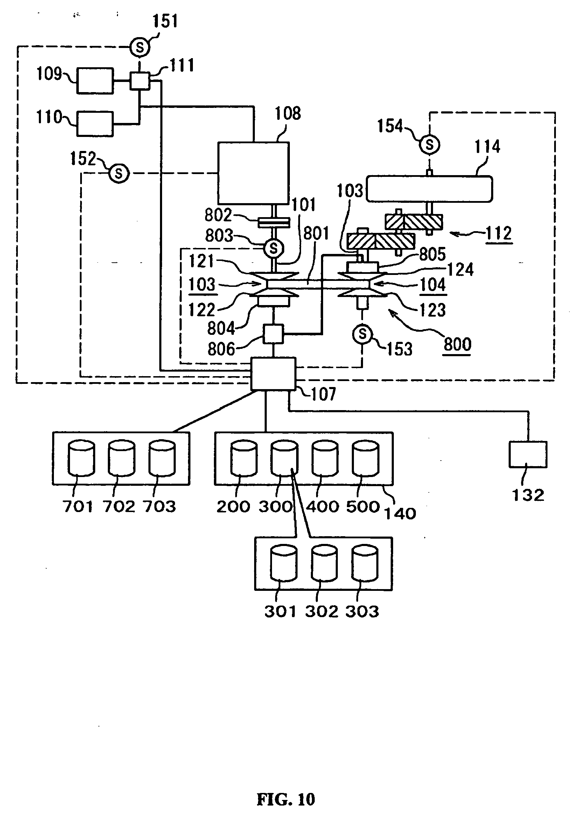

As the above-described continuously variable transmission, for example, a continuously variable transmission including a metal belt as the V-belt may be used as shown in FIG. 10. Note that, in FIG. 10, structural members and sections that have the same operation as those in the continuously variable transmission of the embodiment shown in FIG. 1 are denoted with the same reference numerals.

In this embodiment, a continuously variable transmission 800 including a metal belt as the V-belt (hereinafter referred to as "metal belt CVT") is modified in various ways, in addition to including a V-belt 801 as the V-belt, as shown in FIG. 10.

The metal belt CVT 800 includes a clutch 802, a primary rotation sensor 803, hydraulic cylinders 804, 805, and a hydraulic control valve 806.

The clutch 802 is disposed between an output shaft of the engine 108, and an input shaft of the metal belt CVT 800, and connects/disconnects transmission of power between the output shaft of the engine 108 and the input shaft of the metal belt CVT 800.

The primary rotation sensor 803 detects the rotation speed of the primary sheave 103. In this embodiment, the control device 107 computes the speed change ratio of the continuously variable transmission 800 using the ratio of the rotation speed of the primary sheave 103 detected by the primary rotation sensor 803 and the vehicle speed of the straddle-type vehicle 1000 detected by the vehicle speed sensor 154. Note that, the speed change ratio of the continuously variable transmission 800 may be computed using the ratio of the rotation speed of the primary sheave 103 detected by the primary rotation sensor 803 and the rotation speed of the secondary sheave 104 detected by the secondary sheave rotation speed sensor 153.

The hydraulic cylinder 804 adjusts the groove width of the primary sheave 103. In this embodiment, the hydraulic cylinder 804 applies a pressing force to the moveable flange 122 that forms part of the primary sheave 103, thereby adjusting the groove width of the primary sheave 103. Moreover, the hydraulic cylinder 805 adjusts the groove width of the secondary sheave 104. In this embodiment, the hydraulic cylinder 805 applies a pressing force to the moveable flange 124 that forms part of the secondary sheave 104, thereby adjusting the groove width of the secondary sheave 104. The hydraulic control valve 806 is a valve that adjusts the hydraulic pressure applied to the hydraulic cylinders 804, 805. The hydraulic control valve 806 performs control such that, when the hydraulic pressure of one of the hydraulic cylinders 804 (805) among the hydraulic cylinders 804, 805 is increased, the hydraulic pressure of the other hydraulic cylinder 805 (804) is reduced. The hydraulic control valve 806 is controlled by the control device 107.

The metal belt CVT 800 is controlled by operation of the hydraulic control valve 806 by the control device 107 in accordance with the set control target value such that the speed change ratio of the metal belt CVT 800 is changed. The control device 107 performs control of the metal belt CVT 800 in a similar manner to the control of the continuously variable transmission 100. Note that, in the metal belt CVT 800 according to the embodiment, the control device 107 uses, instead of the control target value of the engine speed, the control target value of the rotation speed of the primary sheave 103.

As described above, the belt type continuously variable transmission according to the invention can be used in a wide variety of application as a belt type continuously variable transmission of a straddle-type vehicle.

### Description of the Reference Numerals and Signs

- 1000: Straddle-type vehicle
- 100: Continuously variable transmission
- 101: Primary shaft
- 102: Primary sheave
- 103: Secondary shaft
- 104: Secondary sheave
- 105: V-belt
- 106: Motor
- 107: Control device
- 108: Engine
- 111: Throttle valve
- 112: Speed reduction mechanism
- 113: Clutch (centrifugal clutch)
- 114: Driving wheel (rear wheel)
- 121: Fixed flange of primary sheave
- 122: Moveable flange of primary sheave
- 123: Fixed flange of secondary sheave
- 124: Moveable flange of secondary sheave
- 131: Accelerator operation member
- 132: Kick down operation member
- 140: Target value setting portion
- 151: Accelerator operation sensor
- 152: Throttle opening degree sensor
- 153: Engine speed sensor
- 154: Secondary sheave rotation speed sensor
- 155: Vehicle speed sensor
- 200: Normal mode
- 300: Kick down mode
- 301: First kick down mode
- 302: Second kick down mode
- 303: Third kick down mode
- 400: Limit value of the control target value used during re-acceleration
- 500: Limit value that is used when the throttle is fully closed
- 701: First control
- 702: Second control
- 703: Third control
- 800: Continuously variable transmission (metal belt CVT)
- 801: V-belt
- 802: Clutch
- 803: Primary rotation speed sensor
- 804,: 805 Hydraulic cylinder
- 806: Hydraulic control valve

## Claims

1. A continuously variable transmission (100) comprising:
a control device (107) adapted to control a speed change ratio of the transmission (100); and
a kick down operation member (132), wherein
the control device (107) comprises: a normal mode (200) that sets a control target value; a kick down mode (300) that sets the control target value further to a Low side than the normal mode (200); **characterized by** a limit value (400) of the control target value used during re-acceleration, and wherein
in response to operation of the kick down operation member (132), the control target value is set by the kick down mode (300) instead of the normal mode (200), and if acceleration is performed after a throttle is fully closed during control of the kick down mode (300), the control target value is set so as not to pass to the Low side of the limit value (400) of the control target value used during re-acceleration.

2. The continuously variable transmission (100) according to claim 1, wherein
the control device (107) comprises a plurality of levels of kick down modes (301, 302, 303) that set the control target value progressively further to the Low side than the normal mode (200), and
in response to operation of the kick down operation member (132), the control target value is set by one of the kick down modes among the plurality of levels of kick down modes (301, 302, 303) instead of the normal mode (200), and if acceleration is performed after the throttle is fully closed during control of the given kick down mode, the control target value is set so as not to pass to the Low side of the limit value (400) of the control target value used during re-acceleration.

3. The continuously variable transmission (100) according to claim 1 or 2, wherein the control device (107) is adapted to determine whether or not acceleration is performed after the throttle is fully closed using a sensor (151) that detects an operation amount of an accelerator operation member (131).

4. The continuously variable transmission (100) according to claim 1, 2 or 3, wherein the control device (107) is adapted to perform control such that:
if acceleration is performed after the throttle is fully closed during control of the kick down mode (300) ; and
if the control target value set by the kick down mode (300) is further to a Top side than the limit value (400) of the control target value used during re-acceleration, the given control target value is set as the control target value; and
if the control target value set by the kick down mode (300) is further to the Low side than the limit value (400) of the control target value used during re-acceleration, the limit value (400) of the control target value used during re-acceleration is set as the control target value instead of the given control target value.

5. The continuously variable transmission (100) according to claim 2, 3 or 4, wherein the control device (107) is adapted to perform control such that if acceleration is performed after the throttle is fully closed during control of the kick down mode (300), the control target value is set by the kick down mode (300) that is set furthest to the Top side among the plurality of levels of kick down modes (301, 302, 303).

6. The continuously variable transmission (100) according to claim 2, 3 or 4, wherein the control device (107) is adapted to perform control such that if acceleration is performed after the throttle is fully closed during control of the kick down mode (300), the control target value is set by the kick down mode (300), among the plurality of levels of kick down modes (301, 302, 303), that is set further to the Top side than the kick down mode used immediately prior to accelerating after the throttle is fully closed.

7. A continuously variable transmission (100) comprising:
a control device (107) adapted to control a speed change ratio of the transmission (100); and
a kick down operation member (132), wherein
the control device (107) comprises: a normal mode (200) that sets a control target value; and kick down modes (301, 302, 303) that set the control target value further to a Low side than the normal mode (200), **characterized in that**
in response to operation of the kick down operation member (132), the control target value is set by the kick down modes (301, 302, 303) instead of the normal mode (200), and
if acceleration is performed after a throttle is fully closed during control of the kick down mode, the control target value is set by the kick down mode, among the plurality of levels of kick down modes (301, 302, 303), either that is set furthest to the Top side or that is set further to the Top side than the kick down mode used immediately prior to accelerating after the throttle is fully closed.

8. The continuously variable transmission (100) according to any one of claims 5 to 7, wherein the control device (107) is adapted to perform control such that the control target value is set such that an engine speed control target value does not temporarily fall immediately after acceleration if acceleration is performed after the throttle is fully closed during control of the kick down mode.

9. The continuously variable transmission (100) according to any one of claims 5 to 8, wherein
the kick down mode sets the control target value based on an engine speed, and
the control device (107) is adapted to perform control such that, if acceleration is performed after the throttle is fully closed during control of the kick down mode, when accelerating, if an engine speed control target value set by the kick down mode is small as compared to the engine speed control target value set immediately prior to acceleration and the throttle is not fully open, the engine speed control target value set immediately prior to acceleration continues to be used until the given engine speed control target value becomes higher than the engine speed control target value set immediately prior to acceleration.

10. The continuously variable transmission (100) according to any one of claims 5 to 9, wherein the control device (107) is adapted to perform control such that the control target value is set such that a speed change ratio control target value does not temporarily vary to the Top side immediately after acceleration if acceleration is performed after the throttle is fully closed during control of the kick down mode.

11. The continuously variable transmission (100) according to any one of claims 5 to 10, wherein the control device (107) is adapted to perform control such that:
if acceleration is performed after the throttle is fully closed during control of the kick down mode; and
when the control target value set by the kick down mode used when accelerating is to the Top side of the control target value used immediately prior to acceleration, and the throttle is not fully open;
the control target value used immediately prior to accelerating continues to be used until, when accelerating, the control target value set by the kick down mode passes to the Low side of the control target value used immediately prior to acceleration.

12. A vehicle (1000) comprising a continuously variable transmission (100) according to any preceding claim.

13. The vehicle according to claim 12, further comprising an engine (108) having an output controlled in accordance with operation of an accelerator operation member (131), wherein the kick down operation member (132) is provided separately from the accelerator operation member (131).

## Patentansprüche

1. Stufenlos verstellbares Getriebe (100), umfassend:
eine Steuerungsvorrichtung (107), die dafür angepasst ist, ein Übersetzungsverhältnis des Getriebes (100) zu steuern; und
ein Kickdown-Betätigungselement (132), wobei
die Steuerungsvorrichtung (107) umfasst: einen Normal-Modus (200), der einen Steuerungszielwert einstellt, einen Kickdown-Modus (300), der den Steuerungszielwert weiter als der Normal-Modus (200) zu einer Niedrigstgangseite verstellt, **gekennzeichnet durch** einen Grenzwert (400) des während der Wiederbeschleunigung verwendeten Steuerungszielwertes, und wobei
als Reaktion auf eine Betätigung des Kickdown-Betätigungselements (132) der Steuerungszielwert **durch** den Kickdown-Modus (300) anstatt **durch** den Normal-Modus (200) eingestellt wird, und wenn eine Beschleunigung nach vollständiger Schließung der Drosselklappe während der Steuerung des Kickdown-Modus (300) erfolgt, der Steuerungszielwert so eingestellt wird, dass er nicht zur Niedrigstgangseite des Grenzwertes (400) des während der Wiederbeschleunigung verwendeten Steuerungszielwertes übergeht.

2. Stufenlos verstellbares Getriebe (100) nach Anspruch 1, wobei
die Steuerungsvorrichtung (107) eine Vielzahl von Stufen von Kickdown-Modi (301, 302, 303) umfasst, die den Steuerungszielwert schrittweise weiter als der Normal-Modus (200) zur Niedrigstgangseite verstellen, und
als Reaktion auf eine Betätigung des Kickdown-Betätigungselements (132) der Steuerungszielwert durch einen der Kickdown-Modi aus der Vielzahl von Stufen von Kickdown-Modi (301, 302, 303) anstatt durch den Normal-Modus (200) eingestellt wird, und wenn eine Beschleunigung nach vollständiger Schließung der Drosselklappe während der Steuerung des gegebenen Kickdown-Modus (300) erfolgt, der Steuerungszielwert so eingestellt wird, dass er nicht zur Niedrigstgangseite des Grenzwertes (400) des während der Wiederbeschleunigung verwendeten Steuerungszielwertes übergeht.

3. Stufenlos verstellbares Getriebe (100) nach Anspruch 1 oder 2, wobei die Steuerungsvorrichtung (107) dafür angepasst ist, unter Verwendung eines Sensors (151), der einen Betätigungsgrad eines Gasbetätigungselements (131) ermittelt, festzustellen, ob eine Beschleunigung nach vollständiger Schließung der Drosselklappe erfolgt oder nicht.

4. Stufenlos verstellbares Getriebe (100) nach Anspruch 1, 2 oder 3, wobei die Steuerungsvorrichtung (107) dafür angepasst ist, die Steuerung so durchzuführen, dass,
wenn eine Beschleunigung nach vollständiger Schließung der Drosselklappe während der Steuerung des Kickdown-Modus (300) erfolgt; und
wenn der durch den Kickdown-Modus (300) eingestellte Steuerungszielwert weiter als der Grenzwert (400) des während der Wiederbeschleunigung verwendeten Steuerungszielwertes zu einer Höchstgangseite verstellt wird, der gegebene Steuerungszielwert als der Steuerungszielwert eingestellt wird, und
wenn der durch den Kickdown-Modus (300) eingestellte Steuerungszielwert weiter als der Grenzwert (400) des während der Wiederbeschleunigung verwendeten Steuerungszielwertes zur Niedrigstgangseite verstellt wird, der Grenzwert (400) des während der Wiederbeschleunigung verwendeten Steuerungszielwertes anstatt des gegebenen Steuerungszielwertes als der Steuerungszielwert eingestellt wird.

5. Stufenlos verstellbares Getriebe (100) nach Anspruch 2, 3 oder 4, wobei die Steuerungsvorrichtung (107) dafür angepasst ist, die Steuerung so durchzuführen, dass, wenn eine Beschleunigung nach vollständiger Schließung der Drosselklappe während der Steuerung des Kickdown-Modus (300) erfolgt, der Steuerungszielwert durch den Kickdown-Modus (300) aus der Vielzahl von Stufen von Kickdown-Modi (301, 302, 303) eingestellt wird, der am weitesten zur Höchstgangseite eingestellt ist.

6. Stufenlos verstellbares Getriebe (100) nach Anspruch 2, 3 oder 4, wobei die Steuerungsvorrichtung (107) dafür angepasst ist, die Steuerung so durchzuführen, dass, wenn eine Beschleunigung nach vollständiger Schließung der Drosselklappe während der Steuerung des Kickdown-Modus (300) erfolgt, der Steuerungszielwert durch den Kickdown-Modus (300) aus der Vielzahl von Stufen von Kickdown-Modi (301, 302, 303) eingestellt wird, der weiter als der unmittelbar vor der Beschleunigung nach vollständiger Schließung der Drosselklappe verwendete Kickdown-Modus zur Höchstgangseite verstellt ist.

7. Stufenlos verstellbares Getriebe (100), umfassend:
eine Steuerungsvorrichtung (107), die dafür angepasst ist, ein Übersetzungsverhältnis des Getriebes (100) zu steuern; und
ein Kickdown-Betätigungselement (132), wobei
die Steuerungsvorrichtung (107) umfasst: einen Normal-Modus (200), der einen Steuerungszielwert einstellt, und Kickdown-Modi (301, 302, 303), die den Steuerungszielwert weiter als der Normal-Modus (200) zu einer Niedrigstgangseite verstellen, **dadurch gekennzeichnet, dass**
als Reaktion auf eine Betätigung des Kickdown-Betätigungselements (132) der Steuerungszielwert durch die Kickdown-Modi (301, 302, 303) anstatt durch den Normal-Modus (200) eingestellt wird, und
wenn eine Beschleunigung nach vollständiger Schließung einer Drosselklappe während der Steuerung des Kickdown-Modus erfolgt, der Steuerungszielwert durch den Kickdown-Modus aus der Vielzahl von Stufen von Kickdown-Modi (301, 302, 303) eingestellt wird, der entweder am weitesten zur Höchstgangseite verstellt ist oder der weiter als der unmittelbar vor der Beschleunigung nach vollständiger Schließung der Drosselklappe verwendete Kickdown-Modus verstellt ist.

8. Stufenlos verstellbares Getriebe (100) nach einem der Ansprüche 5 bis 7, wobei die Steuerungsvorrichtung (107) dafür angepasst ist, die Steuerung so durchzuführen, dass der Steuerungszielwert so eingestellt wird, dass ein Motordrehzahl-Zielwert unmittelbar nach einer Beschleunigung nicht vorübergehend sinkt, wenn die Beschleunigung nach vollständiger Schließung der Drosselklappe während der Steuerung des Kickdown-Modus erfolgt.

9. Stufenlos verstellbares Getriebe (100) nach einem der Ansprüche 5 bis 8, wobei
der Kickdown-Modus den Steuerungszielwert auf der Grundlage einer Motordrehzahl einstellt und
die Steuerungseinrichtung (107) dafür angepasst ist, die Steuerung so durchzuführen, dass, wenn eine Beschleunigung nach vollständiger Schließung der Drosselklappe während der Steuerung des Kickdown-Modus erfolgt, wenn beim Beschleunigen ein durch den Kickdown-Modus eingestellter Motordrehzahl-Steuerungszielwert klein ist im Vergleich zu dem unmittelbar vor der Beschleunigung eingestellten Motordrehzahl-Steuerungszielwert und die Drosselklappe nicht vollständig geöffnet ist, der unmittelbar vor der Beschleunigung eingestellte Motordrehzahl-Steuerungszielwert weiter verwendet wird, bis der gegebene Motordrehzahl-Steuerungszielwert höher wird als der unmittelbar vor der Beschleunigung eingestellte Motordrehzahl-Steuerungszielwert.

10. Stufenlos verstellbares Getriebe (100) nach einem der Ansprüche 5 bis 9, wobei die Steuerungsvorrichtung (107) dafür angepasst ist, die Steuerung so durchzuführen, dass der Steuerungszielwert so eingestellt wird, dass ein Übersetzungsverhältnis-Steuerungszielwert unmittelbar nach einer Beschleunigung nicht vorübergehend zur Höchstgangseite variiert, wenn die Beschleunigung nach vollständiger Schließung der Drosselklappe während der Steuerung des Kickdown-Modus erfolgt.

11. Stufenlos verstellbares Getriebe (100) nach einem der Ansprüche 5 bis 10, wobei die Steuerungsvorrichtung (107) dafür angepasst ist, die Steuerung so durchzuführen, dass:
wenn eine Beschleunigung nach vollständiger Schließung der Drosselklappe während der Steuerung des Kickdown-Modus erfolgt; und
wenn der durch den Kickdown-Modus eingestellte, beim Beschleunigen verwendete Steuerungszielwert auf die Höchstgangseite des unmittelbar vor der Beschleunigung verwendeten Steuerungszielwertes eingestellt ist und die Drosselklappe nicht vollständig geöffnet ist,
der unmittelbar vor der Beschleunigung verwendete Steuerungszielwert weiter verwendet wird, bis beim Beschleunigen der durch den Kickdown-Modus eingestellte Steuerungszielwert zur Niedrigstgangseite des unmittelbar vor der Beschleunigung verwendeten Steuerungszielwertes eingestellt wird.

12. Fahrzeug (1000) mit einem stufenlos verstellbaren Getriebe (100) nach einem der vorhergehenden Ansprüche.

13. Fahrzeug nach Anspruch 12, ferner mit einem Motor (108), dessen Leistungsabgabe entsprechend der Betätigung eines Gasbetätigungselements (131) gesteuert wird, wobei das Kickdown-Betätigungselement (132) von dem Gasbetätigungselement (131) getrennt vorgesehen ist.

## Revendications

1. Transmission à variation continue (100) comprenant :
un dispositif de commande (107) adapté pour commander un rapport de changement de vitesse de la transmission (100) ; et
un élément de commande de rétrogradation forcée (132), dans laquelle
le dispositif de commande (107) comprend : un mode normal (200) qui détermine une valeur cible de commande ; un mode de rétrogradation forcée (300) qui détermine la valeur cible de commande plus éloignée d'un côté Bas que le mode normal (200) ; **caractérisée par** une valeur de limite (400) de la valeur cible de commande utilisée pendant la ré-accélération, et dans laquelle :
en réponse au fonctionnement de l'élément de commande de rétrogradation forcée (132), la valeur cible de commande est déterminée par le mode de rétrogradation forcée (300) au lieu du mode normal (200), et si l'accélération est réalisée après qu'un papillon des gaz a été complètement fermé pendant la commande du mode de rétrogradation forcée (300), la valeur cible de commande est déterminée pour ne pas passer du côté Bas de la valeur limite (400) de la valeur cible de commande utilisée pendant la ré-accélération.

2. Transmission à variation continue (100) selon la revendication 1, dans laquelle :
le dispositif de commande (107) comprend une pluralité de niveaux de modes de rétrogradation forcée (301, 302, 303) qui déterminent la valeur cible de commande progressivement plus éloignée du côté Bas que le mode normal (200), et
en réponse à l'opération de l'élément de commande de rétrogradation forcée (132), la valeur cible de commande est déterminée par l'un des modes de rétrogradation forcée parmi la pluralité de niveaux de modes de rétrogradation forcée (301, 302, 303) au lieu du mode normal (200), et si l'accélération est réalisée après que le papillon des gaz a été complètement fermé pendant la commande du mode de rétrogradation forcée donné, la valeur cible de commande est déterminée afin de ne pas passer du côté Bas de la valeur limite (400) de la valeur cible de commande utilisée pendant la ré-accélération.

3. Transmission à variation continue (100) selon la revendication 1 ou 2, dans laquelle le dispositif de commande (107) est adapté pour déterminer si l'accélération est réalisée ou pas après que le papillon des gaz a été complètement fermé, en utilisant un capteur (151) qui détecte une quantité de fonctionnement d'un élément de commande d'accélérateur (131).

4. Transmission à variation continue (100) selon la revendication 1, 2 ou 3, dans laquelle le dispositif de commande (107) est adapté pour réaliser la commande de sorte que :
si l'accélération est réalisée après que le papillon des gaz a été complètement fermé pendant la commande du mode de rétrogradation forcée (300) ; et
si la valeur cible de commande déterminée par le mode de rétrogradation forcée (300) est plus éloignée d'un côté Haut que la valeur limite (400) de la valeur cible de commande utilisée pendant la ré-accélération, la valeur cible de commande donnée est déterminée en tant que valeur cible de commande ; et
si la valeur cible de commande déterminée par le mode de rétrogradation forcée (300) est plus éloignée du côté Bas que la valeur limite (400) de la valeur cible de commande utilisée pendant la ré-accélération, la valeur limite (400) de la valeur cible de commande utilisée pendant la ré-accélération est déterminée en tant que valeur cible de commande au lieu de la valeur cible de commande donnée.

5. Transmission à variation continue (100) selon la revendication 2, 3 ou 4, dans laquelle le dispositif de commande (107) est adapté pour réaliser la commande de sorte que si l'accélération est réalisée après que le papillon des gaz a été complètement fermé pendant la commande du mode de rétrogradation forcée (300), la valeur cible de commande est déterminée par le mode de rétrogradation forcée (300) qui est le plus éloigné du côté Haut parmi la pluralité de niveaux de modes de rétrogradation forcée (301, 302, 303).

6. Transmission à variation continue (100) selon la revendication 2, 3 ou 4, dans laquelle le dispositif de commande (107) est adapté pour réaliser la commande de sorte que si l'accélération est réalisée après que le papillon des gaz a été complètement fermé pendant la commande du mode de rétrogradation forcée (300), la valeur cible de commande est déterminée par le mode de rétrogradation forcée (300) parmi la pluralité de niveaux de modes de rétrogradation forcée (301, 302, 303) qui est plus éloigné du côté Haut que le mode de rétrogradation forcée utilisé immédiatement avant l'accélération après que le papillon des gaz a été complètement fermé.

7. Transmission à variation continue (100) comprenant :
un dispositif de commande (107) adapté pour commander un rapport de changement de vitesse de la transmission (100) ; et
un élément de commande de rétrogradation forcée (132), dans laquelle :
le dispositif de commande (107) comprend : un mode normal (200) qui détermine une valeur cible de commande ; et des modes de rétrogradation forcée (301, 302, 303) qui déterminent la valeur cible de commande plus éloignée d'un côté Bas que le mode normal (200), **caractérisée en ce que** :
en réponse au fonctionnement de l'élément de commande de rétrogradation forcée (132), la valeur cible de commande est déterminée par les modes de rétrogradation forcée (301, 302, 303) au lieu du mode normal (200), et
si l'accélération est réalisée après qu'un papillon des gaz a été complètement fermé pendant la commande du mode de rétrogradation forcée, la valeur cible de commande est déterminée par le mode de rétrogradation cible, parmi la pluralité de niveaux de modes de rétrogradation cibles (301, 302, 303), qui est le plus éloigné du côté Haut ou plus éloigné du côté Haut que le mode de rétrogradation forcée utilisé immédiatement avant l'accélération après que le papillon des gaz a été complètement fermé.

8. Transmission à variation continue (100) selon l'une quelconque des revendications 5 à 7, dans laquelle le dispositif de commande (107) est adapté pour réaliser la commande de sorte que la valeur cible de commande est déterminée de sorte qu'une valeur cible de commande de vitesse de moteur ne chute pas temporairement, immédiatement après l'accélération si l'accélération est réalisée après que le papillon des gaz a été complètement fermé pendant la commande du mode de rétrogradation forcée.

9. Transmission à variation continue (100) selon l'une quelconque des revendications 5 à 8, dans laquelle :
le mode de rétrogradation forcée détermine la valeur cible de commande en fonction d'une vitesse de moteur, et
le dispositif de commande (107) est adapté pour réaliser la commande de sorte que, si l'accélération est réalisée après que le papillon des gaz a été complètement fermé pendant la commande du mode de rétrogradation forcée, lors de l'accélération, si une valeur cible de commande de vitesse de moteur déterminée par le mode de rétrogradation forcée est petite par rapport à la valeur cible de commande de vitesse de moteur déterminée immédiatement avant l'accélération et que le papillon des gaz ne soit pas complètement ouvert, la valeur cible de commande de vitesse de moteur déterminée immédiatement avant l'accélération continue à être utilisée jusqu'à ce que la valeur cible de commande de vitesse de moteur devienne supérieure à la valeur cible de commande de vitesse de moteur déterminée immédiatement avant l'accélération.

10. Transmission à variation continue (100) selon l'une quelconque des revendications 5 à 9, dans laquelle le dispositif de commande (107) est adapté pour réaliser la commande de sorte que la valeur cible de commande est déterminée de sorte qu'une valeur cible de commande de rapport de changement de vitesse ne varie pas temporairement par rapport au côté Haut immédiatement après l'accélération, si l'accélération est réalisée après que le papillon des gaz a été complètement fermé pendant la commande du mode de rétrogradation forcée.

11. Transmission à variation continue (100) selon l'une quelconque des revendications 5 à 10, dans laquelle le dispositif de commande (107) est adapté pour réaliser la commande de sorte que :
si l'accélération est réalisée après que le papillon des gaz a été complètement fermé pendant la commande du mode de rétrogradation forcée ; et
lorsque la valeur cible de commande déterminée par le mode de rétrogradation forcée utilisé lorsque l'accélération est sur le côté Haut de la valeur cible de commande utilisée immédiatement avant l'accélération, et que le papillon des gaz n'est pas complètement ouvert ;
la valeur cible de commande utilisée immédiatement avant l'accélération, continue à être utilisée jusqu'à ce que, lors de l'accélération, la valeur cible de commande déterminée par le mode de rétrogradation forcée passe du côté Bas de la valeur cible de commande utilisée immédiatement avant l'accélération.

12. Véhicule (1000) comprenant une transmission à variation continue (100) selon l'une quelconque des revendications précédentes.

13. Véhicule selon la revendication 12, comprenant en outre un moteur (108) ayant un rendement contrôlé selon le fonctionnement d'un élément de commande d'accélérateur (131), dans lequel l'élément de commande de rétrogradation forcée (132) est prévu séparément de l'élément de commande d'accélérateur (131).
